Europäisches Patentamt

European Patent Office

Office européen des brevets

(11) Veröffentlichungsnummer: **0 050 833**
**B1**

(12) # EUROPÄISCHE PATENTSCHRIFT

(45) Veröffentlichungstag der Patentschrift:
05.12.84

(51) Int. Cl.³: **B 23 K 9/235**

(21) Anmeldenummer: 81108629.7

(22) Anmeldetag: 21.10.81

(54) Verfahren zum Herstellen von Schwerbauteilen.

(30) Priorität: 25.10.80 DE 3040296

(43) Veröffentlichungstag der Anmeldung:
05.05.82 Patentblatt 82/18

(45) Bekanntmachung des Hinweises auf die Patenterteilung:
05.12.84 Patentblatt 84/49

(84) Benannte Vertragsstaaten:
AT BE FR GB IT NL SE

(56) Entgegenhaltungen:
DE - A - 1 527 259
DE - B - 1 148 031
FR - A - 2 109 733
FR - A - 2 292 107
GB - A - 548 992

(73) Patentinhaber: **Thyssen Aktiengesellschaft vorm. August Thyssen-Hütte, Kaiser-Wilhelm-Strasse 100, D-4100 Duisburg (DE)**

(72) Erfinder: **Grosse-Wördemann, Josef, Dr. rer. nat., Meller Landstrasse 10, D-4500 Osnabrück (DE)**
Erfinder: **Luckow, Herbert, Mathildenstrasse 39, D-4000 Düsseldorf (DE)**

(74) Vertreter: **König, Reimar, Dr.-Ing. et al, Patentanwälte Dr.-Ing. Reimar König Dipl.-Ing. Klaus Bergen Wilhelm-Tell-Strasse 14 Postfach 260162, D-4000 Düsseldorf 1 (DE)**

## Beschreibung

Die Erfindung bezieht sich auf ein Verfahren zum Herstellen dickwandiger zylindrischer Schwerbauteile, bei dem Bauteilkomponenten über mindestens eine Pufferlage und eine Montagenaht miteinander verschweisst werden.

Die zunehmende Grösse von Schwerbauteilen, beispielsweise grosser Druckbehälter und schwerer Wellen, bringt Schmiedestück- und Bauteilgewichte mit sich, die sich kaum noch bewältigen lassen. Die Praxis geht daher in zunehmendem Masse dazu über, Schwerbauteile aus einzelnen, gerade noch handhabbaren und transportfähigen Komponenten herzustellen und diese Komponenten vor Ort miteinander zu verschweissen. Ein Baustellenschweissen bringt jedoch eine Reihe von Problemen mit sich; es erfordert, abgesehen von dem damit verbundenen apparativen Aufwand, vor allem normalerweise ein anschliessendes Spannungsarmglühen und abschliessendes Prüfen des fertigen Bauteils. Das Glühen ist trotz normalerweise im Hinblick auf die Gefahr einer Versprödung begrenzter Arbeitstemperatur und Streckenenergie beim Verbindungsschweissen erforderlich, weil der Grundwerkstoff der Komponenten in dem der Schweissnaht benachbarten Bereich, der sogenannten Wärmeeinflusszone, während des Schweissens einer zyklischen Temperaturbeanspruchung unterliegt, die wie jede andere Wärmebehandlung ohne gleichzeitige Verformung eine Umkörnung und damit eine mehr oder minderstarke Veränderung von Festigkeit und Zähigkeit mit sich bringt. Insbesondere kommt es im Bereich der Spitzentemperatur, d.h. in unmittelbarer Nachbarschaft der Schmelzlinie, zu einer Grobkornbildung, die mit einem erheblichen Zähigkeitsverlust verbunden ist. Da in diesem Bereich gleichzeitig auch die Eigenspannungen am grössten sind, ist hier die Gefahr des Entstehens von Nebennahtrissen besonders gross.

Als besonders kritisch haben sich die zwischen je zwei Schweissraupen befindlichen Zwickel erwiesen, da sich im Bereich der Zwickelwurzel die höchsten Eigenspannungen ergeben. Das kann zu Rissen führen, die sich bei äusseren Spannungen leicht in der Raupenrichtung ausbreiten.

Die vorerwähnten Schwierigkeiten sind besonders gross beim Verschweissen artfremder Werkstoffe, insbesondere von Guss-, Walz- und Schmiedestücken. Hinzu kommt, dass auch das Spannungsarmglühen häufig zum Entstehen von Relaxationsrissen im Überhitzungsbereich der Wärmeeinflusszone führt.

Versuche, den Grundwerkstoff vorzuglühen, um mit der damit verbundenen Zähigkeitserhöhung den Zähigkeitsverlust in der Wärmeeinflusszone aufzufangen, haben nicht zum Erfolg geführt, da der durch das Glühen erreichte Gefügezustand der Wärmeeinflusszone beim Schweissen wieder verlorengeht. Auch Versuche, durch metallurgische Massnahmen das Kornwachstum im Grobkornbereich der Wärmeeinflusszone mit Hilfe von Ausscheidungsphasen zu begrenzen, sind bislang erfolglos geblieben.

Weitere Schwierigkeiten, nicht nur beim Baustellenschweissen, resultieren daraus, dass häufig Komponenten aus artfremden Werkstoffen miteinander verschweisst werden müssen. Dies ist beispielsweise beim Herstellen von Mehrlagen-Behältern der Fall, das zumeist ein Verschweissen eines mehrlagigen, zylindrischen Behältermittelteils mit zwei kappenartigen, häufig geschmiedeten Endstücken erfordert. Die Schweissverbindungen müssen spannungsfrei geglüht werden. Dabei verliert der Mehrlagenbehälter jedoch seine durch das Fertigungsverfahren aufgebrachten Vorspannungen, womit ein erheblicher Vorteil der Mehrlagenbauweise verlorengeht.

Um eine ausreichende Sprödbruchsicherheit auch ohne ein ansonsten erforderliches Spannungsfreiglühen zu erreichen, ist es aus der deutschen Offenlegungsschrift 1 527 259 bekannt, auf die Stossfläche des massiven Endstücks eine Pufferlage aufzubringen und das im allgemeinen noch transportfähige Endstück mit der Pufferlage zunächst spannungsfreizuglühen, um es anschliessend mit dem mehrlagigen Behälterteil durch eine Montageschweissnaht zu verbinden. Bei diesem Verfahren muss das Schweissgut sowohl der Pufferlage als auch der Montagenaht eine besonders hohe Sicherheit gegen Sprödbruch und Risse aufweisen. Bei Verwendung von normalem Schweissgut für die Pufferlagen und die Montagenaht lässt sich somit die Gefahr der Rissbildung nicht vermeiden.

Der Erfindung liegt nun die Aufgabe zugrunde, ein Verfahren zu schaffen, das eine besonders gleichmässige Übergangszone zwischen Grundwerkstoff und Montagenaht ergibt und damit ohne Gefahr von Rissbildungen ein hohes Mass an Sprödbruchsicherheit gewährleistet. Die Lösung dieser Aufgabe basiert auf dem Gedanken, durch die Wahl der Schweissbedingungen, insbesondere eine in bestimmter Weise gerichtete Erstarrung, sowohl der Wärmeeinflusszone als auch dem Schweissgut der Pufferlage ein günstiges Gefüge zu verleihen, d.h. bei einem möglichst geringen Grobkornanteil und geringen Eigenspannungen eine höhere Zähigkeit zu erreichen.

Die Lösung dieser Aufgabe besteht darin, dass bei einem Verfahren der eingangs erwähnten Art erfindungsgemäss beim Aufschweissen der Pufferlage die Elektrodenachse geneigt in bezug auf die Stossflächenebene der Bauteilkomponente sowie mit einem Spurwinkel von jeweils 15 bis 50° geneigt in bezug auf zwei senkrecht zueinander sich in der Komponentenachse schneidende Bezugsebenen verläuft, von denen eine durch den Schweisspunkt geht, und dass sich die niedergeschmolzenen Schweissraupen der Pufferlage an ihren Flanken um 50 bis 70% der Schweissraupenbreite überdecken. Dabei kann der Spurwinkel in bezug auf die durch den Schweisspunkt gehende Bezugsebene 15 bis 35° und der andere Spurwinkel 15 bis 50° betragen.

Die erfindungsgemässe Schräglage der Schweisselektrode bringt auch eine geringe Aufmischung des Schweissguts durch Legierungsbestandteile des Grundwerkstoffs mit sich und trägt damit zu einer Vergleichmässigung der Übergangszone bei. Hinzu kommt, dass gerade der kritische Bereich der Wärmeeinflusszone beim Legen der zweiten Naht und der folgenden Nähte infolge der Elektrodenschräglage in erheblichem Masse angelassen wird. Das führt zu einem Spannungsabbau und zu einer Kornverfeinerung. Damit wird die Sprödbruchsicherheit erhöht.

Die aus der doppelten Winkelanstellung der Schweisselektrode resultierenden Vorteile zeigen sich selbst beim Verschweissen aufbaugeschweisster Komponenten, bei denen der Grundwerkstoff zwangsläufig eine andere Struktur besitzt als das Schweissgut. Versuche haben in diesem Zusammenhang ergeben, dass beim Montageschweissen zweier durch Aufbauschweissen hergestellter Komponenten keine qualitätsmindernden Einflüsse im Bereich der Werkstoffverbindung auftreten.

Je nach der Grösse der beiden Spur- bzw. Anstellwinkel innerhalb der erfindungsgemässen Grenzen lässt sich die Kornrichtung mehr oder weniger aus der Senkrechten zur Stossflächenebene verschieben. Durch die Wahl der Anstellwinkel und einen geringeren Elektrodenvorschub in Richtung der Wanddicke wird eine stärkere Überdeckung der einzelnen Schweissraupen erreicht und damit eine Zwickelbildung weitgehend unterdrückt, d.h. der Übergang der Schmelzzone von Grundwerkstoff und Schweissgut wird mehr oder minder stark eingeebnet.

Um eine möglichst geringe Zwickeltiefe und demgemäss eine weitgehende Einebnung der Schmelzzone zu erreichen, sollte die Schweissstromstärke 200 bis 700 A und die Schweissspannung 30 bis 34 V bzw. die Streckenenergie 12 bis 35 kJ/cm betragen, je nach dem Schweissdrahtdurchmesser.

Weitere Vorteile ergeben sich insbesondere im Hinblick auf die Vermeidung einer Rissbildung, wenn die einzelnen Komponenten auf 100 bis 250 °C vorgewärmt und/oder nach dem Aufbringen der Pufferlagen im Bereich der Wärmeeinflusszone bei 500 bis 650 °C geglüht werden.

Es besteht bei vergütetem Material auch die Möglichkeit, die Pufferlagen vor dem Vergüten des Bauteils aufzubringen. Dadurch wird die Übergangszone im Grundwerkstoff mitvergütet, wodurch Qualitätsunterschiede gegenüber unbehandelten Grundwerkstoffen in diesem Bereich beseitigt werden.

Weiterhin ist es bei dem erfindungsgemässen Verfahren möglich, die Höhe einer Pufferzone grösser als die Tiefe der Wärmeeinflusszone beim Montageschweissen zu halten, um den Grundwerkstoff im wesentlichen unbeeinflusst von der Schweisshitze des Montageschweissens zu lassen bzw. die Wärmeeinflusszone des Montageschweissens ganz auf die Pufferlagen zu beschränken.

Schliesslich kann sich auch die Schweissgutzusammensetzung, ausgehend von einem mit dem Grundwerkstoff gerade noch verträglichen Schweissgut, mit zunehmendem Abstand von der Komponentenstossfläche immer mehr in Richtung der Unverträglichkeit ändern, um auf diese Weise einen fliessenden Übergang zu schaffen und beim Montageschweissen einen mit dem Grundwerkstoff an sich nicht verträglichen sprödbruchsicheren Schweisswerkstoff verwenden zu können.

Die aufgebrachten Pufferlagen und die Übergangszone zum Grundwerkstoff können vor dem Verbindungsschweissen zerstörungsfrei auf Fehler untersucht werden. Die Erkennbarkeit der Fehler in der wärmebeeinflussten Übergangszone zum Grundwerkstoff wird dadurch erhöht. Fehler in diesem Bereich lassen sich dann beseitigen.

Die Erfindung wird nachfolgend anhand der Zeichnung und von Ausführungsbeispielen des näheren erläutert. In der Zeichnung zeigen:

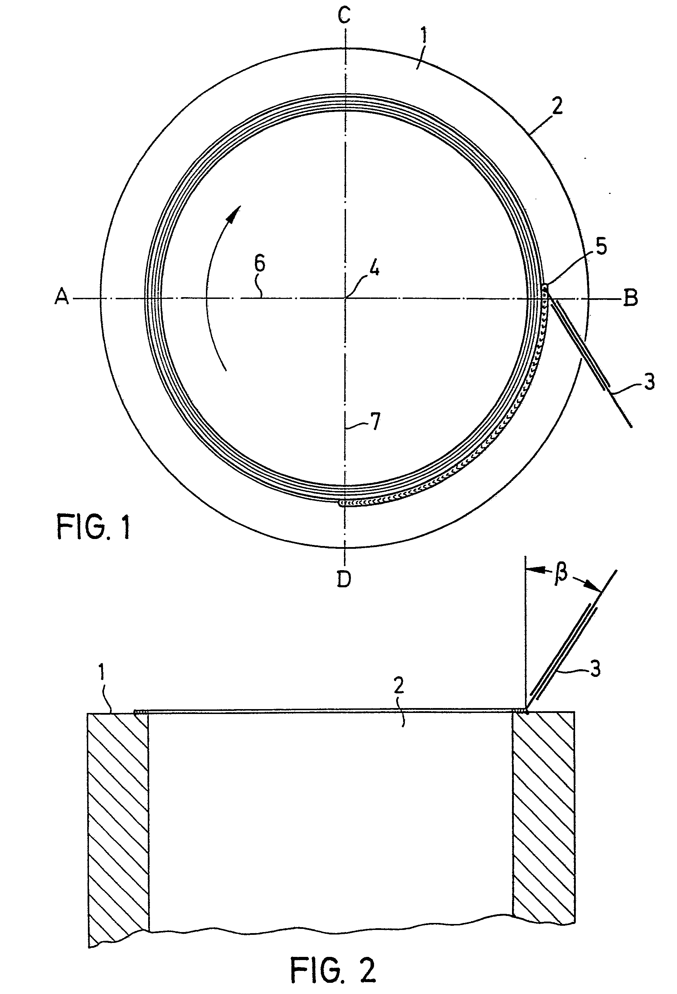

Fig. 1 eine Draufsicht auf die Stossfläche einer Bauteilkomponenten,

Fig. 2 einen Schnitt nach der Linie A–B in Figur 1,

Fig. 3 einen Schnitt nach der Linie C–D in Figur 1,

Fig. 4 in vergrösserter Darstellung einen Teil der Stossfläche mit zwei Schweissraupen,

Fig. 5 eine aus mehreren Raupen bestehende, nach dem erfindungsgemässen Verfahren hergestellte Schweissnaht, und

Fig. 6 ein Schliffbild einer in herkömmlicher Weise hergestellten vergleichbaren Schweissnaht.

Beim Aufbringen einer Pufferlage auf die Stossfläche 1 einer Bauteilkomponente 2 verläuft die Achse der Schweisselektrode 3 sowohl winklig in bezug auf eine sich durch die Bauteilachse 4 und den Schweisspunkt 5 erstreckende Bezugsebene 6 als auch winklig in bezug auf eine auf dieser Ebene senkrecht stehende, ebenfalls durch die Komponentenachse 4 gehende Bezugsebene 7. Dabei ergibt sich in bezug auf die Bezugsebene 6 in der Projektion auf die Bezugsebene 7 der Spurwinkel $\alpha$ und in Bezug auf die Bezugsebene 7 in der Projektion auf die Bezugsebene 6 der Spurwinkel $\beta$.

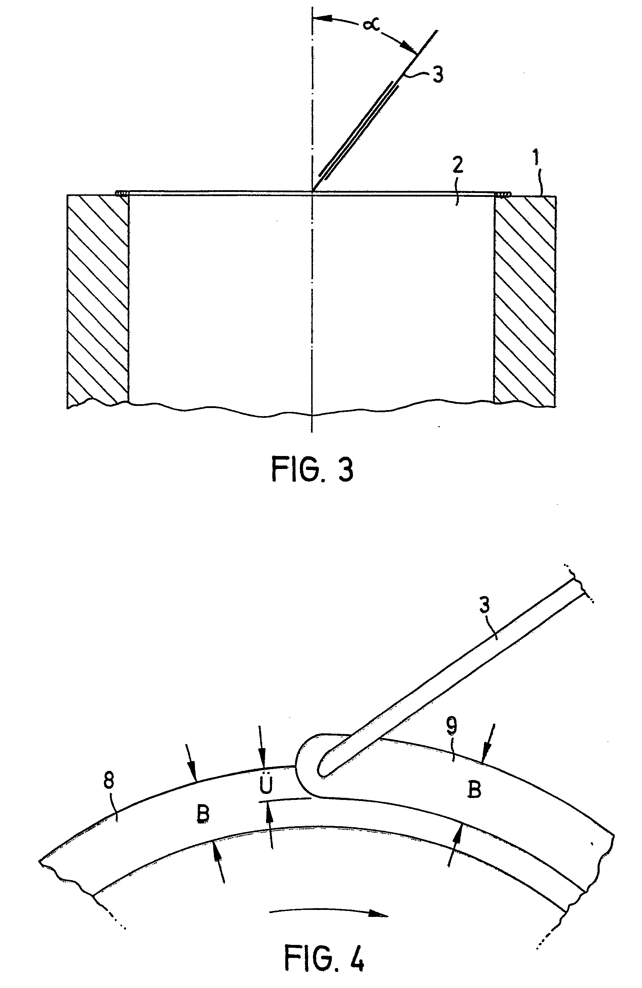

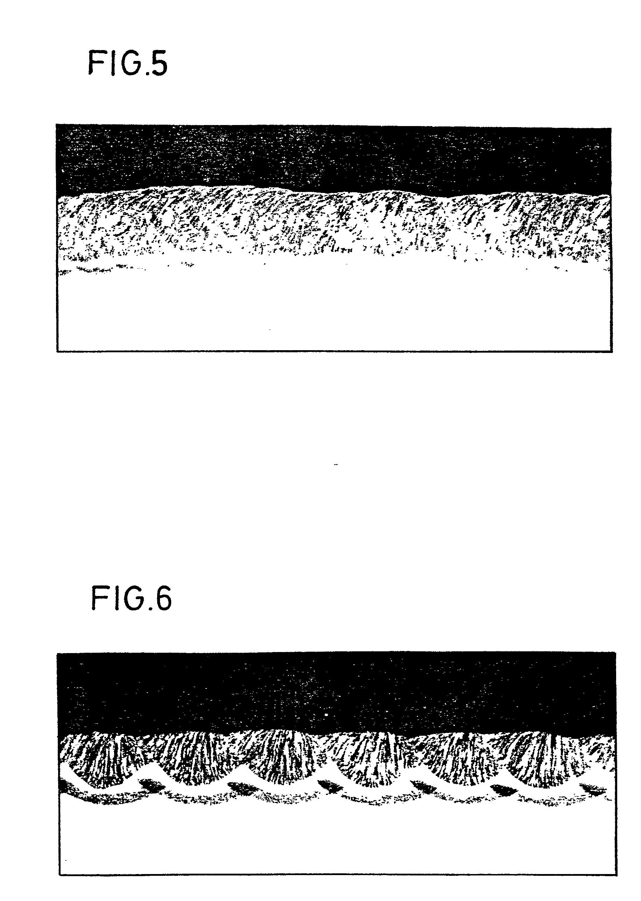

Fig. 4 lässt deutlich erkennen, wie sich die beiden Schweissraupen 8 und 9 überdecken. Dabei beträgt das Verhältnis des Überdeckungsmasses Ü zur Schweissraupenbreite B ~ 0,57. Ein derartiges Überdeckungsmass gewährleistet ein weitgehend zwickelfreies Schweissgut, wie die Aufnahme der Fig. 5 im Vergleich zu der Aufnahme gemäss Fig. 6 ohne weiteres erkennen lässt. Dabei zeigt sich im Gegensatz zu der Aufnahme gemäss Fig. 6 deutlich auch die Gleichmässigkeit der Übergangszone zwischen dem Schweissgut einerseits und dem Grundwerkstoff andererseits, insbesondere deren nur noch schwach gewellte Frontlinie.

Beispiel 1

Im Rahmen eines Versuchs sollten zwei geschmiedete Behälterschüsse aus gleichartigen Werkstoffen durch Baustellenschweissen miteinander verbunden werden. Die beiden Behälterschüsse bestanden aus einem Stahl mit

0,26 % Kohlenstoff
0,15 % Silicium
0,30 % Mangan
0,009% Schwefel
0,008% Phosphor
1,70 % Chrom
3,50 % Nickel

Die Behälterschüsse wurden in der Werkstatt auf 200 °C ± 20 °C vorgewärmt. Anschliessend wurden die Schüsse jeweils mit Pufferlagen versehen; dies geschah mit 4,0 mm-Schweisselektroden folgender Qualitäten:

1. Lage S 3 Ni Mo 1
2. Lage S 3 Ni Mo Cr
3. und weitere Lagen: S 3 Ni Mo Cr.

Dabei ergab sich folgender Analysenverlauf:

| Bezeichnung | C (%) | Si (%) | Mn (%) | P (%) | S (%) | Al (%) | Cu (%) | Cr (%) | Ni (%) | Mo (%) | As (%) |
|---|---|---|---|---|---|---|---|---|---|---|---|
| Grundwerkstoff | 0,24 | 0,19 | 0,32 | 0,008 | 0,007 | 0,003 | 0,07 | 1,77 | 3,03 | 0,45 | 0,023 |
| 1.Pufferlage | 0,15 | 0,21 | 0,79 | 0,012 | 0,008 | 0,011 | 0,06 | 0,77 | 2,42 | 0,44 | 0,020 |
| 2. Pufferlage | 0,09 | 0,14 | 0,86 | 0,017 | 0,010 | 0,008 | 0,05 | 0,40 | 1,88 | 0,30 | 0,010 |
| 3. und weitere Pufferlagen | 0,08 | 0,17 | 1,01 | 0,020 | 0,009 | 0,009 | 0,04 | 0,32 | 1,72 | 0,60 | 0,015 |
| Schweissgut der Montagenaht | 0,09 | 0,24 | 1,19 | 0,021 | 0,009 | 0,014 | 0,04 | 0,28 | 1,60 | 0,62 | 0,14 |

Bei den Pufferlagen betrug der Spurwinkel $\alpha$ 15° und der Spurwinkel $\beta$ 30°. Die Überdeckung der Schweissraupen der Pufferlagen belief sich auf 55% der Schweissraupenbreite.

Die Pufferlagen wurden mit folgenden Schweissdaten niedergelegt:

Schweissstromstärke: 500 A
Schweissspannung: 32 V
Streckenenergie: 19 kJ/cm

Nachdem die Breite der Pufferlagen insgesamt je Behälterschuss 15 mm betrug, wurden die Wärmeeinflusszonen zwischen Pufferlagen und Grundwerkstoff vergütet:

Nach dem Vergüten wurden die Wärmeeinflusszonen in der Werkstatt der folgenden Prüfung unterzogen:

1. Ultra-Schall-Prüfung
2. Röntgen-Prüfung
3. Sichtprüfung am Schliff
4. Prüfung nach der Parallelschliff-Methode

Ergebnis: keine anzeigepflichtigen Fehler

Die werkstattgeprüften, mit den Pufferlagen versehenen Behälterschüsse wurden anschliessend zur Baustelle transportiert und dort durch ein Verbindungsschweissen miteinander verbunden. Da die zu verbindenden Abschnitte der Pufferlagen nur aus Schweissmaterial bestanden, traten Risse in der Verbindungsnaht aufgrund der erfindungsgemässen Massnahme nicht auf.

Beispiel 2

Im Rahmen eines weiteren Versuches sollten ein geschmiedeter Boden und ein formgebend geschweisster Behälterschuss aus ungleichartigen Werkstoffen durch Baustellenschweissen miteinander verbunden werden, von denen der eine Werkstoff 1 in der Wärmeübergangszone zur Rissbildung neigte und der andere Werkstoff 2 schweissunempfindlich war.

Der geschmiedete Boden bestand aus einem Stahl mit

0,26 % Kohlenstoff
0,15 % Silicium
0,30 % Mangan
0,009% Schwefel
0,009% Phosphor
1,70 % Chrom
3,50 % Nickel,

der formgebend geschweisste Behälterschuss 2 aus Schweissgut mit

0,10 % Kohlenstoff
0,15 % Silicium
1,22 % Mangan
0,007% Schwefel
0,007% Phosphor
0,05 % Chrom
1,0 % Nickel.

Der Boden aus dem zur Rissbildung in der Wärmeübergangszone neigenden Stahl wurde in der Werkstatt auf 200 °C vorgewärmt. Anschliessend wurde der Boden mit Pufferlagen versehen, wobei der Werkstoff der Schweisselektroden von Lage zu Lage verändert wurde, um ihn an den schweissunempfindlichen Stahl des Behälterschusses 2 anzunähern. Dabei wurden nacheinander Schweisselektroden folgender Zusammensetzung verwendet:

| | C (%) | Si (%) | Mn (%) | P (%) | S (%) | Mo (%) | Ni (%) | Cr (%) |
|---|---|---|---|---|---|---|---|---|
| 1. u. 2. Pufferlage: | 0,20 | 0,15 | 0,40 | 0,008 | 0,008 | 0,60 | 3,50 | 1,60 |
| 3., 4. u. 5. Pufferlage: | 0,13 | 0,15 | 1,50 | 0,008 | 0,008 | 0,55 | 1,00 | 0,05 |

Bei den Pufferlagen betrug der Spurwinkel $\alpha$ 15° und der Spurwinkel $\beta$ 30°. Die Überdeckung der Schweissraupen der Pufferlagen belief sich auf 55% der Schweissraupenbreite.

Die Pufferlagen wurden mit den folgenden Schweissdaten niedergelegt:

Schweissstromstärke: 500 A
Schweissspannung: 32 V
Streckenenergie: 19 kJ/cm

Nachdem die Breite der Pufferlagen an dem Behälterschuss 20 mm betrug und mit der letzten Pufferlage der Werkstoff des Behälterschusses erreicht war, wurde die Wärmeeinflusszone zwischen den Pufferlagen und dem Grundwerkstoff 600 Min. bei 640 °C geglüht.

Nach der Glühbehandlung wurde die Wärmeeinflusszone in der Werkstatt der folgenden Prüfung unterzogen:

1. Ultra-Schall-Prüfung
2. Röntgen-Prüfung
3. Sichtprüfung am Schliff
4. Prüfen nach der Parallelschliff-Methode

Ergebnis: keine anzeigepflichtigen Fehler.

Der werkstattgeprüfte, mit den Pufferlagen versehene Boden und der Behälterschuss wurden anschliessend zur Baustelle transportiert und dort durch Verbindungsschweissen miteinander verbunden. Aufgrund der erfindungsgemässen Massnahmen traten Risse in der Verbindungsnaht nicht auf.

## Patentansprüche

1. Verfahren zum Herstellen grosser, dickwandiger zylindrischer Schwerbauteile, bei dem Bauteilkomponenten über mindestens eine Pufferlage aus Schweissgut und eine Montagenaht miteinander verschweisst werden, dadurch gekennzeichnet, dass beim Aufschweissen der Pufferlage die Elektrodenachse geneigt in bezug auf die Stossflächenebene der Bauteilkomponente sowie mit einem Spurwinkel von jeweils 15 bis 50° geneigt in bezug auf zwei senkrecht zueinander sich in der Komponentenachse schneidende Bezugsebene verläuft, von denen eine durch den Schweisspunkt geht, und dass sich die niedergeschmolzenen Schweissraupen der Pufferlage an ihren Flanken um 50 bis 70% der Schweissraupenbreite überdecken.

2. Verfahren nach Anspruch 1, dadurch gekennzeichnet, dass der Spurwinkel in bezug auf die durch den Schweisspunkt gehende Bezugsebene 15 bis 35° beträgt.

3. Verfahren nach einem der Ansprüche 1 und 2, dadurch gekennzeichnet, dass die Schweissstromstärke 200 bis 700 A und die Schweissspannung 30 bis 34 V beträgt.

4. Verfahren nach einem oder mehreren der Ansprüche 1 bis 3, dadurch gekennzeichnet, dass die Streckenenergie 12 bis 35 kJ/cm beträgt.

5. Verfahren nach einem oder mehreren der Ansprüche 1 bis 4, dadurch gekennzeichnet, dass die einzelnen Komponenten auf 100 bis 250 °C vorgewärmt werden.

6. Verfahren nach einem oder mehreren der Ansprüche 1 bis 5, dadurch gekennzeichnet, dass die Wärmeeinflusszone der Komponenten nach dem Aufbringen der Pufferlagen bei 500 bis 650 °C geglüht wird.

7. Verfahren nach einem oder mehreren der Ansprüche 1 bis 6, dadurch gekennzeichnet, dass die einzelnen Komponenten zusammen mit den aufgebrachten Pufferlagen vergütet werden.

8. Verfahren nach einem oder mehreren der Ansprüche 1 bis 7, dadurch gekennzeichnet, dass die Höhe der Pufferlagen grösser als die Tiefe der Wärmeeinflusszone beim Montageschweissen ist.

9. Verfahren nach einem oder mehreren der Ansprüche 1 bis 8, dadurch gekennzeichnet, dass sich die Schweissgutzusammensetzung der Pufferlagen vom Grundwerkstoff zur Montagenaht in Richtung der Analyse des Verbindungsschweissgutes ändert.

## Revendications

1. Procédé de fabrication d'éléments de construction lourds, de grandes dimensions, cylindriques et à paroi épaisse, selon lequel on soude les unes aux autres les parties composant ces éléments par l'intermédiaire d'au moins une couche de transition en métal d'apport et d'un cordon d'assemblage, caractérisé en ce que lorsque l'on dépose la couche de transition l'axe de l'électrode est incliné par rapport au plan de la face d'extrémité de la partie composant l'élément de construction et est incliné d'un angle d'attaque de 15° à 50° par rapport à chacun de deux plans de référence s'intersectant perpendiculairement l'un à l'autre dans l'axe de la dite partie, l'un de ces plans passant par le point de soudure, et en ce que les passes de soudure de la couche de transition se chevauchent à leurs flancs sur 50 à 70% de la largeur de la passe.

2. Procédé selon la revendication 1, caractérisé en ce que l'angle d'attaque par rapport au plan de référence passant par le point de soudure est compris entre 15 et 35°.

3. Procédé selon l'une des revendications 1 et 2, caractérisé en ce que l'intensité du courant de soudure est comprise entre 200 et 700 A et la tension de soudure entre 30 et 34 V.

4. Procédé selon une ou plusieurs des revendications 1 à 3, caractérisé en ce que l'énergie d'étirage est comprise entre 12 et 35 kJ/cm.

5. Procédé selon une ou plusieurs des revendications 1 à 4, caractérisé en ce que chacune des parties composant l'élément de construction est préchauffée entre 100 et 250 °C.

6. Procédé selon une ou plusieurs des revendications 1 à 5, caractérisé en ce que la zone affectée par le traitement thermique de soudage des parties composant l'élément de construction est recuite entre 500 et 650 °C.

7. Procédé selon une ou plusieurs des revendications 1 à 6, caractérisé en ce que les différentes parties composant l'élément de construction sont soumises à un traitement de trempe et revenu.

8. Procédé selon une ou plusieurs des revendications 1 à 7, caractérisé en ce que la hauteur des couches de transition est supérieure à la profondeur de la zone affectée par le traitement thermique de soudage lors de la soudure d'assemblage.

9. Procédé selon une ou plusieurs des revendications 1 à 8, caractérisé en ce que la composition du métal déposé des couches de transition varie de la matière de base vers le cordon de soudure en direction de l'analyse du métal de soudure d'assemblage.

## Claims

1. Process for the production of large, thick-walled, cylindrical heavy constructions, in which component parts are welded together by at least one buffer layer of weld metal and an assembly weld seam, characterized in that, in the welding on of the buffer layer, the electrode axis is oriented inclined with respect to the plane of the joint surface of the component part and also inclined with an angle of attack of 15 to 50° relative to each of two reference planes intersecting each other perpendicularly in the component axis, of which one plane passes through the welding point, and that the molten deposited weld beads of the buffer layer overlap at their flanks by 50 to 70% of the width of a weld bead.

**0 050 833**

2. Process according to claim 1, characterized in that the angle of attack is 15 to 35° relative to the reference plane passing through the welding point.

3. Process according to one of claims 1 and 2, characterized in that the welding current strength is 200 to 700 A and the welding voltage 30 to 34 V.

4. Process according to one or more of claims 1 to 3, characterized in that the linear energy rate is 12 to 35 kJ/cm.

5. Process according to one or more of claims 1 to 4, characterized in that the individual components are preheated to 100 to 250 °C.

6. Process according to one or more of claims 1 to 5, characterized in that the heat influence zone of the components is annealed at 500 to 650 °C after the application of the buffer layers.

7. Process according to one or more of claims 1 to 6, characterized in that the individual components together with the applied buffer layers are tempered.

8. Process according to one or more of claims 1 to 7, characterized in that the height of the buffer layers is greater than the depth of the heat influence zone in the assembly welding.

9. Process according to one or more of claims 1 to 8, characterized in that the composition of the weld metal of the buffer layers changes from the basic material towards the assembly weld seam in a direction approaching the analysis of the connecting weld metal.

FIG. 1

FIG. 2

FIG. 3

FIG. 4

11

FIG.5

FIG.6